# EUROPÄISCHE PATENTANMELDUNG

(11) **EP 2 008 955 A1**
(43) Veröffentlichungstag der Anmeldung: **31.12.2008**
(21) Anmeldenummer: 07012877.2
(22) Anmeldetag: 30.06.2007
(51) Int. Cl.: B65G 57/28

(54) **Anordnung zum Sammeln leerer Paletten, wie z. B. Europaletten**

(71) Anmelder: Schmale, Erhard, 34479 Breuna-Wettesingen (DE)
(72) Erfinder: Schmale, Erhard, 34479 Breuna-Wettesingen (DE)
(74) Vertreter: Walther, Walther & Hinz GbR

(57) **Zusammenfassung**

Gegenstand der Erfindung ist eine Anordnung zum Sammeln leerer Paletten, wie z. B. Europaletten, umfassend ein Gestell (40) zur Aufnahme mehrerer Paletten in nahezu vertikaler Stellung, wobei das Gestell (40) um ca. 90° verschwenkbar ist, wobei das Gestell (40) zwei etwa im rechten Winkel zueinander stehende Aufnahmen (42, 43) aufweist, wobei die Paletten mit ihrer Schmalseite auf der einen Aufnahme aufliegen und nach Verschwenken des Gestells (40) mit ihrer Bodenseite auf der anderen Aufnahme des Gestells, wobei dem Gestell (40) eine Palettenaufnahme (30) nachgeordnet ist, wobei sowohl die andere Aufnahme (43) als auch die Palettenaufnahme (30) mit mehreren hintereinander angeordneten Rollen (44) versehen ist sowie ein Lager mit mehreren übereinander angeordneten Bühnen mit einer Anordnung.

## Beschreibung

Die vorliegende Erfindung betrifft eine Anordnung zum Sammeln leerer Paletten, wie z. B. Europaletten, umfassend ein Gestell zur Aufnahme mehrerer Paletten in nahezu vertikaler Stellung, wobei das Gestell um ca. 90° verschwenkbar ist, wobei das Gestell zwei in etwa im rechten Winkel zueinander stehende Aufnahmen, insbesondere Schenkelpaare aufweist, wobei die Paletten mit ihrer Schmalseite auf der einen Aufnahme bzw. dem einen Schenkelpaar aufliegen und nach Verschwenken des Gestells mit ihrer Breitseite auf der anderen Aufnahme bzw. dem anderen Schenkelpaar des Gestells, wobei dem Gestell eine Palettenaufnahme nachgeordnet ist.

Moderne Regallager bestehen aus mehreren nebeneinander angeordneten Gassen, wobei die Gassen Rollenbahnen aufweisen. Diese Rollenbahnen sind gegenüber der Horizontalen leicht geneigt, so dass am hinteren Ende aufgesetzte Paletten unter Schwerkraft bis nach vorne zur Entnahmeseite auf der Rollenbahn entlang gleiten können. Am vorderen Ende einer solchen Gasse findet dann die Entnahme der einzelnen Produkte von der Palette statt. Nachdem die Palette geleert worden ist, wird sie durch ein Flurförderzeug abgeholt und in einem entsprechenden Speicher abgestellt.

Nach einer anderen Variante wird die Palette dann, wenn sie entleert ist, von dem Lagerarbeiter von der Rollenbahn abgenommen, zu einem eingangs beschriebenen Gestell geschafft, wie es aus der EP 1 557 382 B1 bekannt ist, und dort eingestellt. Im Einzelnen zeichnet sich ein solches verschwenkbares Gestell aus zwei winklig zueinander angeordneten Schenkelpaaren aus, wobei zunächst durch einen Arbeiter auf dieses Gestell die Paletten hochkant hintereinander eingestellt werden. Das heißt, dass die Paletten mit ihrer Schmal- oder Stirnseite auf dem einen Schenkelpaar aufsitzen und sich am anderen Schenkelpaar mit ihrer Unterseite abstützen. Dieses eine Schenkelpaar ist gegenüber der Horizontalen um einen Winkel α leicht geneigt, so dass beim Aufsetzen der einzelnen Paletten sichergestellt ist, dass die Paletten mit ihrer Bodenunterseite an dem anderen Schenkelpaar anliegen, so dass keine Gefahr des Umfallens der Paletten besteht. Ist nun das Gestell voll, so wird das Gestell um etwa 90° verschwenkt, so dass die Paletten mit ihrer Bodenunterseite auf dem anderen Schenkelpaar aufliegen. Nunmehr wird das gesamte Gestell auf einer Bahn verschoben, bis sich die Paletten mit ihrer Bodenunterseite über einer tischförmigen Palettenaufnahme befinden, worauf sie dann abgelassen werden, so dass bei Zurückfahren des Gestells die Paletten auf der Palettenaufnahme verbleiben. Von der Palettenaufnahme wird dieser Palettenstapel dann z. B. von einem Gabelstapler abgenommen.

Nachteilig hierbei ist, dass diese Palettenaufnahme nicht integraler Bestandteil des Ablaufes in einem solchen Lager ist. Dies deshalb, weil die Palettenaufnahme einen Fremdkörper in dem Ablauf in einem solchen Lager darstellt. Darüber hinaus ist relativ viel Kraft erforderlich, um das Gestell mit einer Vielzahl von Paletten auf den Schienen zu der Palettenaufnahme zu schieben.

Der Erfindung liegt daher die Aufgabe zu Grunde, hier Abhilfe zu schaffen; insbesondere soll das Sammeln und der Abtransport leerer Paletten integraler Bestandteil des Ablaufs in einem solchen Lager sein, wobei darüber hinaus der Kraftaufwand der Lagerarbeiter bei seiner Tätigkeit des Sammelns der Paletten entlastet werden soll.

Die Aufgabe wird erfindungsgemäß dadurch gelöst, dass sowohl die andere Aufnahme des Gestells, also die Schenkel des anderen Schenkelpaares als auch die Palettenaufnahme mit mehreren hintereinander angeordneten Rollen versehen ist. Das bedeutet, dass durch die Anordnung von Rollen auf der anderen Aufnahme des Gestells der Palettenstapel bei nur geringfügiger Neigung relativ zur Horizontalen von allein auf die Palettenaufnahme gelangen kann. Dadurch, dass die Palettenaufnahme als Rollenbahn ausgebildet ist, besteht nunmehr die Möglichkeit, dass das Sammeln von einzelnen Paletten zu Palettenstapeln integraler Bestandteil des Ablaufs in einem solchen Lager wird. Denn ein solcher Palettenstapel, der mit dem Gestell auf eine Rollenbahn übergeben wird, auf der dann der Palettenstapel nach unten in Richtung der Entnahme läuft, kann durch das normale Flurförderzeug, das integraler Bestandteil eines Lagers, und hier insbesondere auch eines Lagers mit mehreren übereinander angeordneten Bühnen ist, immer dann abgenommen werden, wenn gerade Zeit ist, also das Flurförderzeug nicht mit dem Beschicken von Rollenbahnen mit vollen Paletten beschäftigt ist. Speziell in Bezug auf die Neigung der Palettenaufnahme als Rollenbahn ist vorgesehen, dass diese Rollenbahn quasi Z-förmig zu den Rollenbahnen verläuft, die dem Transport der vollen Paletten dienen. D. h. die erfindungsgemäße Anordnung dient sowohl dem Sammeln von Paletten, als auch der Zwischenlagerung von Paletten als Palettenstapel, sowohl in dem Gestell als auch auf der als Rollenbahn ausgebildeten Palettenaufnahme, und zwar über die gesamte Länge dieser Rollenbahn.

Hieraus wird deutlich, dass ein erheblicher Puffer zur Zwischenlagerung von Paletten geschaffen wird und zwar zum einen durch das Gestell und zum anderen durch die Palettenaufnahme, die aufgrund ihrer Länge in der Lage ist, mindestens zwei Palettenstapel hintereinander aufzunehmen. Somit ist das Flurförderzeug in der Lage, ausschließlich dann Leerpaletten abzunehmen, wenn keine Notwendigkeit besteht, volle Paletten den Rollenbahnen zuzuführen.

Hieraus wird deutlich, dass das andere Schenkelpaar in verschwenkter Position mit seinen Rollen fluchtend zu der Palettenaufnahme verläuft, d. h. in gleicher Ebene. Das bedeutet weiterhin, dass das andere Schenkelpaar in gleicher Weise gegenüber der Horizontalen geneigt ist wie die Palettenaufnahme.

Gegenstand der Erfindung ist ebenfalls ein Lager mit mehreren übereinander angeordneten Bühnen mit einer Anordnung der zuvor beschriebenen Art.

Anhand der Zeichnungen wird die Erfindung nachstehend beispielhaft näher erläutert.
- Fig. 1a, 1b: zeigen schematisch ein Regallager im Schnitt mit zwei übereinander angeordneten Bühnen, wobei zu beiden Seiten auf die Bühne zulaufend Gassen angeordnet sind, die Rollenbahnen aufweisen, auf denen beladene Paletten gefördert werden;
- Fig. 2: zeigt eine Ansicht gemäß der Linie II - II aus Figur 1 b;
- Fig. 3a-3h: zeigen den Vorgang des Sammelns von Paletten in dem Gestell und dem Transport auf der Palettenaufnahme (Rollenbahn);
- Fig. 4: zeigt eine Ansicht von oben auf das Gestell;
- Fig. 5: zeigt einen Schnitt gemäß der Linie V - V aus Fig. 4.

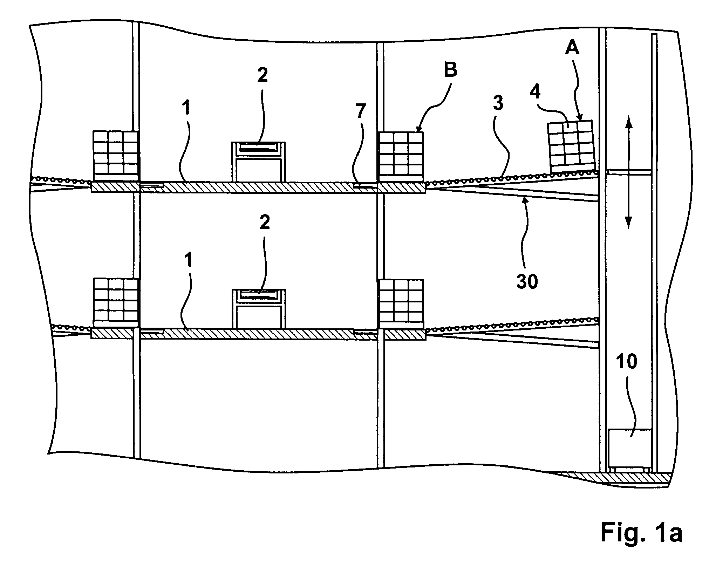

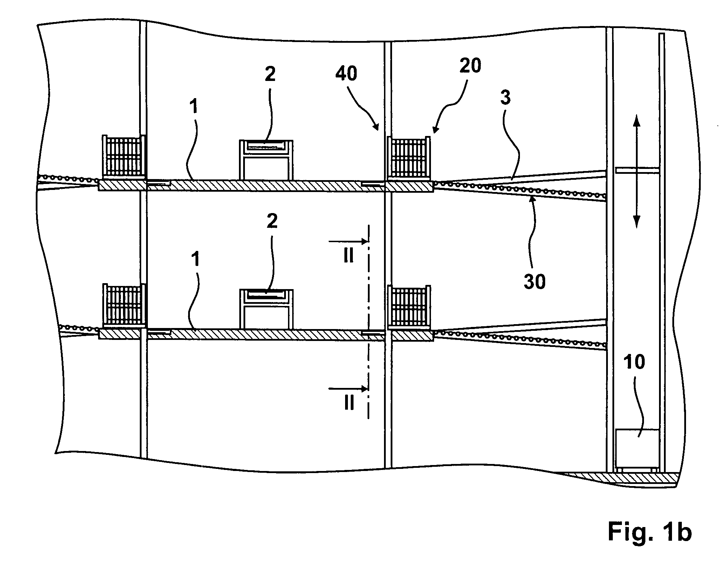

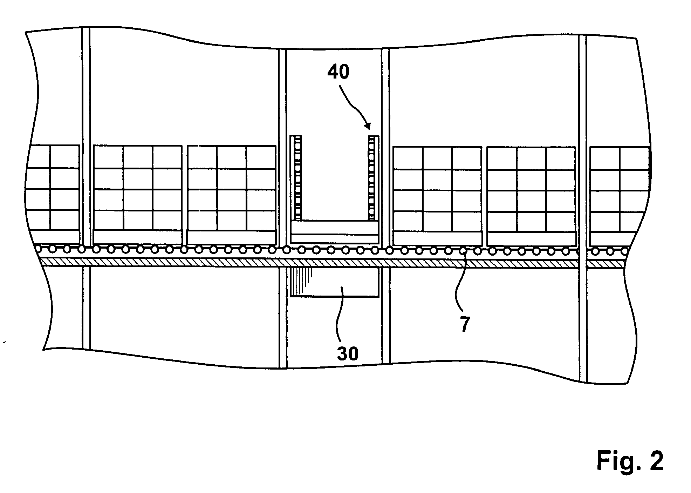

Gemäß den Figuren 1 bis 2 sind zwei übereinander angeordnete Bühnen 1 vorgesehen, wobei die Bühnen 1 mittig ein Transportband 2 zum Transport von Kästen oder anderen Transportgegenständen aufweisen. Zu beiden Seiten der Bühne 1 befinden sich mehrere nebeneinander angeordnete Gassen 3, die als Rollenbahnen ausgebildet sind. Auf diesen Rollenbahnen 3 laufen befüllte Paletten 4 von einer Anfangsstellung gemäß Pfeil A in eine Endstellung gemäß Pfeil B. Die Neigung der Rollenbahnen beträgt etwa 4 %. An der Stellung gemäß Pfeil B werden die auf der Palette befindlichen Güter von einem Transportarbeiter abgenommen und dem Transportband 2 zugeführt. Die Beladung der Gassen 3 erfolgt durch ein Flurförderzeug 10, das in den Figuren 1 ff lediglich schematisch dargestellt ist. Ein solches Flurförderzeug 10 ist schlussendlich nichts anderes als ein Gabelstapler, der auf Schienen verfährt. Durch dieses Flurförderzeug werden - wie bereits ausgeführt - die Gassen 3 mit den entsprechenden vollen Paletten versorgt. Sind die Paletten durch den Transportarbeiter abgearbeitet, d. h. leer, so werden sie von dem Transportarbeiter auf einer auf der Bühne quer zu den Gassen verlaufenden Rollenbahn 7 gezogen bis zu einer Gasse, in der eine Sammelstelle 20 für derartige leere Paletten vorgesehen ist. Diese Sammelstelle 20 umfasst im Wesentlichen das Gestell 40 zur Lagerung leerer Paletten, d. h. es befindet sich an der Sammelstelle 20 ein Gestell zur Aufnahme mehrerer übereinander gestapelter Paletten. Diesem Gestell nachgeordnet, als Bestandteil der erfindungsgemäßen Anordnung, ist die Palettenaufnahme 30. Die Palettenaufnahme 30 ist im vorliegenden Fall als eine Rollenbahn ausgebildet, die allerdings im Gegensatz zu der zuvor beschriebenen Gasse einen genau entgegengesetzten Winkel zur Horizontalen aufweist, wie die Rollenbahn in den Gassen, wie sich dies insbesondere aus den Figuren 1a und 1b ergibt. D. h., diese Rollenbahn ist nach unten um ca. 4 % geneigt, so dass ein Palettenstapel bis zur Entnahmeseite rollt, wo er dann vom Flurförderzug entnommen wird.

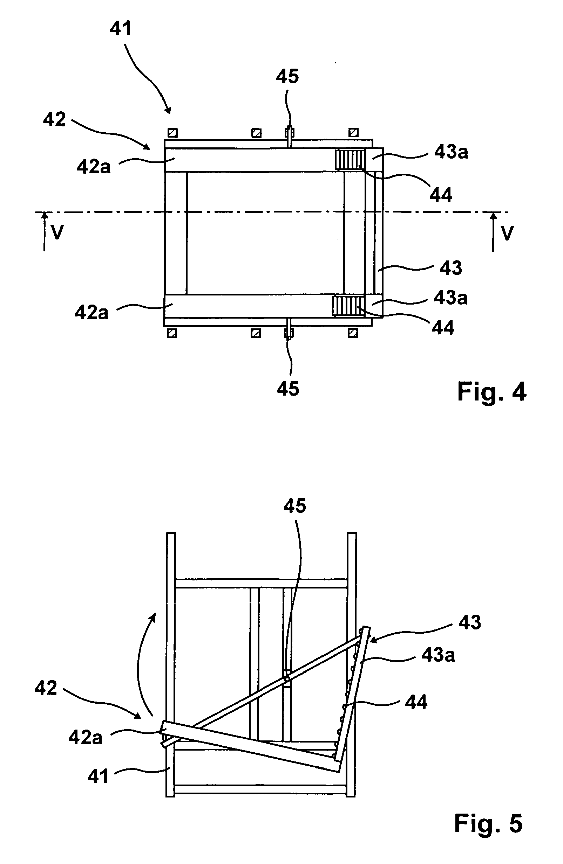

Anhand der Figuren 4 und 5 wird zunächst die Konstruktion und die Funktion des Gestells 40 erläutert. Das Gestell 40 umfasst einen Rahmen 41, wobei der Rahmen 41 zwei etwa im rechten Winkel zueinander angeordnete miteinander verbundene Aufnahmen 42 und 43 aufweist. Die Aufnahmen 42 und 43 stellen sich im vorliegenden Fall jeweils als ein Schenkelpaar 42a und 43a dar, wobei das Schenkelpaar 43a mehrere hintereinander über die Länge des Schenkels 43 angeordnete Rollen 44 aufweist. Die Schenkel der Schenkelpaare sind zu einem Winkel verbunden (Fig. 5).

Wie bereits an anderer Stelle erläutert, sind die beiden rechtwinklig zueinander angeordneten Aufnahmen 42 und 43 in einem Rahmen 41 gelagert. Der Rahmen 41 nimmt die Aufnahme 42 um die Achse 45 verschwenkbar auf. Das heißt, dass die Paletten mit ihrer Bodenseite zunächst an der Aufnahme 43 mit den Schenkeln 43a anliegen und mit ihrer Stirnseite auf der Aufnahme 42 mit den Schenkeln 42a. Nach Verschwenken der Aufnahme 42 um die Achse 45 um im Wesentlichen 90° befinden sich die Schenkel 43a mit den Rollen 44 in einer leicht geneigten Position zu der Horizontalen, so dass der Palettenstapel allein auf Grund der Schwerkraft das Bestreben hat, von diesen beiden Schenkeln 43a herunterzurollen. Dies geschieht dann entlang der als Rollenbahn ausgebildeten Palettenaufnahme 30 bis zum Ende der Rollenbahn, wobei dann der Stapel an Paletten am Ende durch das Flurförderzeug 10 abgenommen wird.

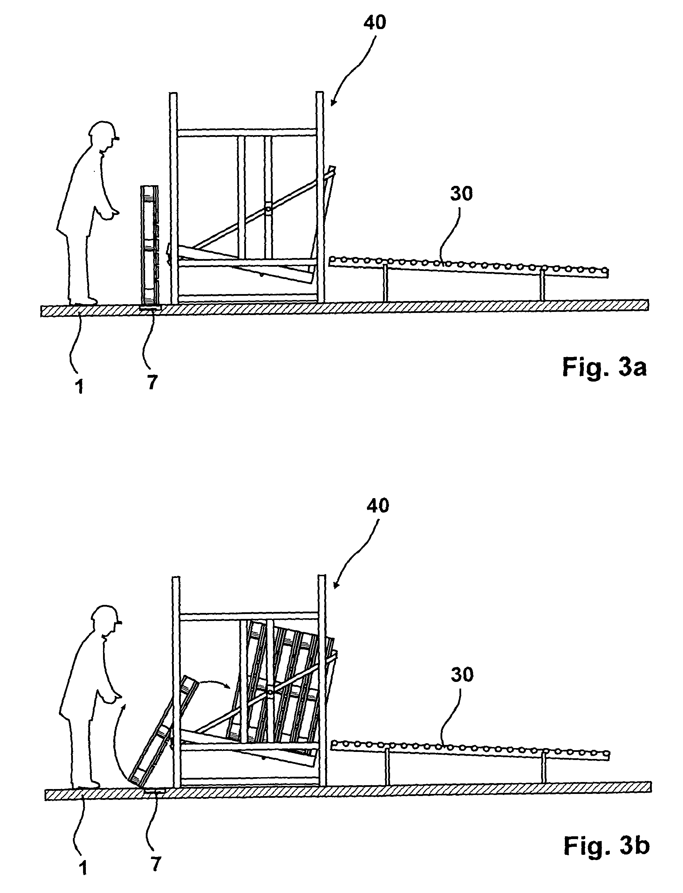

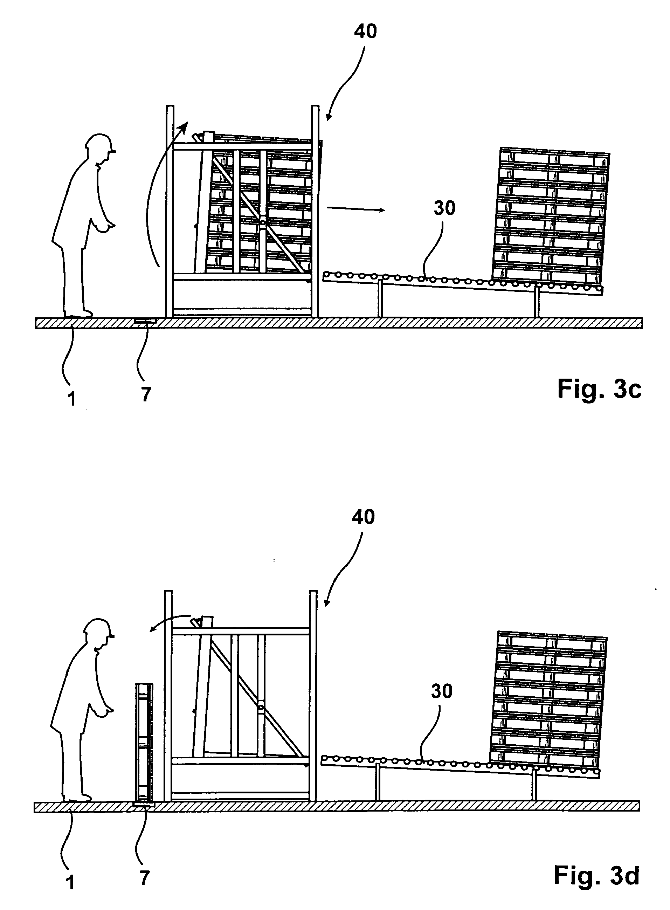

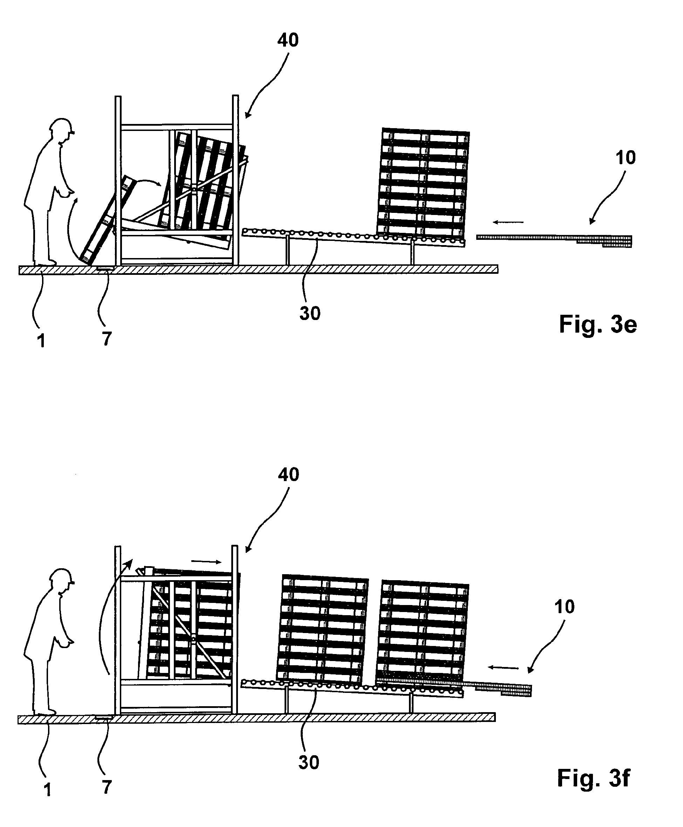

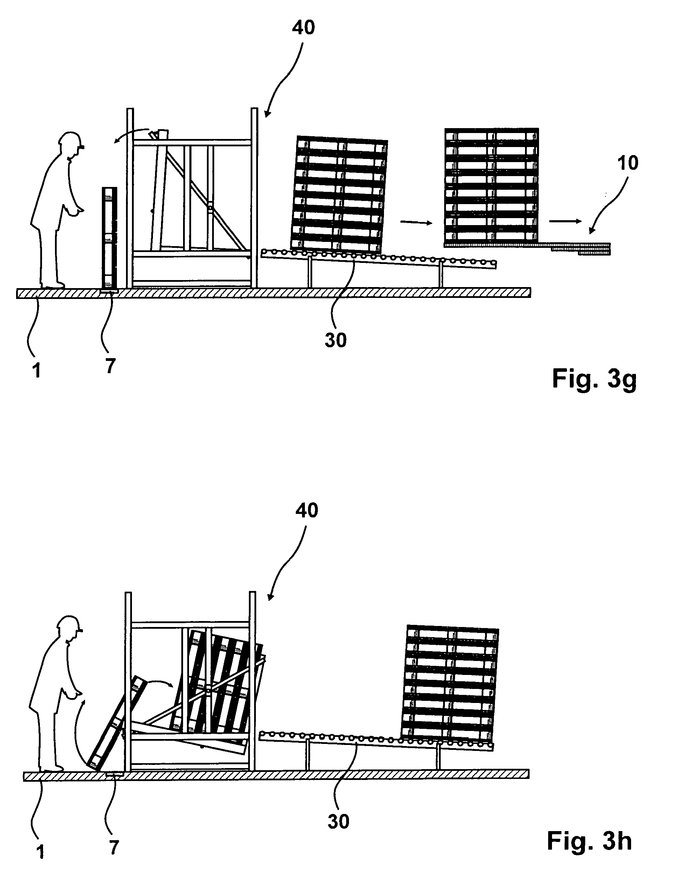

Betrachtet man in diesem Zusammenhang noch einmal die Figuren 3a, 3b, so erkennt man den Vorgang des Beladens des Gestells 40 mit Paletten, den Schwenkvorgang der Aufnahmen in dem Rahmen mit nachfolgendem Abrollen des Stapels von den Schenkeln 43a auf die Palettenaufnahme, im vorliegenden Fall eine Rollenbahn 30. Aus den Figuren 3f ff wird deutlich, wie durch die Gabel des Flurförderzeugs 10 der jeweilige am Ende aufstehende Palettenstapel von der Rollenbahn 30 abgenommen wird.

Wesentlich bei der Erfindung ist nun, dass das Sammeln und das Abnehmen von Paletten integraler Bestandteil des Lagerablaufes ist. Denn das Flurförderzeug 10 kann immer dann einen Palettenstapel leerer Paletten abnehmen, wenn hierzu gerade Zeit ist. Ansonsten ist das Flurförderzeug 10 damit beschäftigt, die einzelnen Gassen mit vollen Paletten zu versorgen. Etwaige gesonderte Stapler zum Abnehmen leerer Palettenstapel sind nicht erforderlich.

## Patentansprüche

1. Anordnung zum Sammeln leerer Paletten, wie z. B. Europaletten, umfassend ein Gestell (40) zur Aufnahme mehrerer Paletten in nahezu vertikaler Stellung, wobei das Gestell (40) um ca. 90° verschwenkbar ist, wobei das Gestell (40) zwei etwa im rechten Winkel zueinander stehende Aufnahmen (42, 43) aufweist, wobei die Paletten mit ihrer Schmalseite auf der einen Aufnahme aufliegen und nach Verschwenken des Gestells (40) mit ihrer Bodenseite auf der anderen Aufnahme des Gestells, wobei dem Gestell (40) eine Palettenaufnahme (30) nachgeordnet ist,
**dadurch gekennzeichnet,**
**dass** sowohl die andere Aufnahme (43) als auch die Palettenaufnahme (30) mit mehreren hintereinander angeordneten Rollen (44) versehen ist.

2. Anordnung nach Anspruch 1,
**dadurch gekennzeichnet,**
**dass** die Palettenaufnahme (30) gegenüber der Horizontalen geneigt verläuft.

3. Anordnung nach einem der voranstehenden Ansprüche,
**dadurch gekennzeichnet,**
**dass** die andere Aufnahme (43) in verschwenkter Position mit ihren Rollen (44) fluchtend zu der Palettenaufnahme (30) verläuft.

4. Anordnung nach einem der voranstehenden Ansprüche,
**dadurch gekennzeichnet,**
**dass** eine jede Aufnahme (42, 43) zwei parallel verlaufende Schenkel (42a, 43a) aufweist.

5. Lager mit mehreren übereinander angeordneten Bühnen,
**gekennzeichnet durch**
eine Anordnung gemäß einem oder mehrerer der Ansprüche 1 bis 4.
